Europäisches Patentamt

European Patent Office

Office européen des brevets

(19)

(11) EP 0 768 773 B1

(12) **EUROPÄISCHE PATENTSCHRIFT**

(45) Veröffentlichungstag und Bekanntmachung des Hinweises auf die Patenterteilung:
03.11.1999 Patentblatt 1999/44

(51) Int Cl.⁶: **H04L 9/08**

(21) Anmeldenummer: 96107509.0

(22) Anmeldetag: 10.05.1996

(54) **Verfahren zum Etablieren eines gemeinsamen Schlüssels für autorisierte Personen mittels Threshold-Verfahrens**

Method of establishing a common key for authorised users by means of a threshold scheme

Procédé pour établir une clé commune pour personnes autorisées, utilisant un schéma cryptographique à seuil

(84) Benannte Vertragsstaaten:
AT BE CH DE DK ES FI FR GB GR IE IT LI LU MC NL PT SE

(30) Priorität: 14.10.1995 DE 19538385

(43) Veröffentlichungstag der Anmeldung:
16.04.1997 Patentblatt 1997/16

(73) Patentinhaber: Deutsche Telekom AG
53113 Bonn (DE)

(72) Erfinder: Schwenk, Jörg, Dr.rer.nat.
64807 Dieburg (DE)

(56) Entgegenhaltungen:
• IEEE INFOCOM ' 93. THE CONFERENCE ON COMPUTER COMMUNICATIONS PROCEEDINGS. TWELFTH ANNUAL JOINT CONFERENCE OF THE IEEE COMPUTER AND COMMUNICATIONS SOCIETIES. NETWORKING: FOUNDATION FOR THE FUTURE (CAT. NO.93CH3264-9), SAN FRANCISCO, CA, USA, 28 MARCH-, ISBN 0-8186-3580-0, 1993, LOS ALMITOS, CA, USA, IEEE COMNPUT. SOC. PRESS, USA, Seiten 1406-1413 vol.3, XP000419708 LAIH C -S ET AL: "On the design of conference key distribution systems for the broadcasting networks"
• ADVANCES IN CRYPTOLOGY - CRYPTO '93. 13TH ANNUAL INTERNATIONAL CRYPTOLOGY CONFERENCE PROCEEDINGS, PROCEEDINGS OF CRYPTO '93, SANTA BARBARA, CA, USA, 22-26 AUG. 1993, ISBN 3-540-57766-1, 1994, BERLIN, GERMANY, SPRINGER-VERLAG, GERMANY, Seiten 480-491, XP000502372 FIAT A ET AL: "Broadcast encryption"
• COMMUNICATIONS OF THE ACM, NOV. 1979, USA, Bd. 22, Nr. 11, ISSN 0001-0782, Seiten 612-613, XP000565227 SHAMIR A: "How to share a secret"

**Beschreibung**

Die Erfindung betrifft ein Verfahren der im Oberbegriff des Patentanspruchs 1 näher definierten Art. Ein derartiges Verfahren ist von C.-S. LAIH & S.-M. YEN in "On the Design of Conference Key Distribution Systems for the Broadcasting Networks" beschrieben.

Verschlüsselungsverfahren in vielfältiger Art gehören zum Stand der Technik und gewinnen zunehmend an kommerzieller Bedeutung. Sie werden in der letzten Zeit dazu eingesetzt, Nachrichten über allgemein zugängliche Übertragungsmedien zu verschicken, wobei aber nur die Besitzer eines Krypto-Schlüssels diese Nachrichten im Klartext lesen können.

Für einen derartigen Einsatz werden vielfach symmetrische Verschlüsselungsalgorithmen verwendet (für die Definition eines symmetrischen Verschlüsselungsalgorithmus siehe auch A. Beutelspacher: Kryptologie, Vieweg Verlag 1994).

Nachfolgend soll kurz an einem Beispiel ein derartiger Einsatz erläutert werden:
Nachrichten einer Zentrale Z sollen an autorisierte Personen, die nachfolgend mit $P_1, ..., P_n$ bezeichnet werden, wobei $n \leq m$ gilt und P die Gesamtzahl der Personen bedeutet, über ein Rundfunkmedium (terrestrischer Rundfunk, Satellit, Kabelnetz) oder andere ungesicherte Kanäle gesendet werden.

Jeder Person $P_i$ aus P ist ein persönlicher Schlüssel $k_i$ zugeordnet, den nur die Person selbst und die Zentrale Z kennen. Die Zentrale Z wählt nun den Schlüssel k und verschlüsselt ihn für i= 1, ..., N mit dem jeweiligen persönlichen Schlüssel $k_i$:

$$C_i = E(k_i, k).$$

Dieses Kryptogramm wird dann an die ausgewählte autorisierte Person $P_i$ geschickt, die den Schlüssel k berechnen kann, indem sie das Kryptogramm entschlüsselt:

$$D(k_i, C_i) = D(k_i, E(k_i, k)) = k.$$

Dieses Verfahren wird z. B. im Pay-TV-System Eurocrypt (DIN EN 50 094) zum Etablieren eines Systemschlüssels eingesetzt.

Der Nachteil dieses Verfahrens besteht darin, daß der Schlüssel k *verschlüsselt* übertragen wird. In vielen Staaten steht die Verwendung eines Verschlüsselungsalgorithmus unter rechtlichen Vorbehalten. Dies könnte z. B. dazu führen, daß der oben verwendete Algorithmus E (für engl. "encryption") sehr schwach sein muß.

Das erwähnte, der Erfindung am nächsten liegender Verfahren ist das von C.-S. LAIH u. S.-M. Yen in "On the Design of Conference Key Distribution Systems for the Broadcasting Networks" beschriebene. Es dient beim Rechnerverbund zum Etablieren einer gemeinsamen geheimen Information k als Schlüssel für autorisierte Personen aus einer größeren Personengruppe und wird durch einen "chairman" als zentrale Instanz bzw. Zentrale vergeben. Diese Zentrale Z entscheidet darüber, welche Personen aus einer Personengruppe autorisiert sind. Das Verfahren garantiert, daß nur diese Personen den Schlüssel erhalten bzw. berechnen können und verwendet die Schritte, daß

- jede Person $P_i$ des vorgegebenen Personenkreises P einen persönlichen Schlüssel $k_i$ besitzt, der nur dieser Person $P_i$ und der Zentrale Z bekannt ist,

- in der Zentrale unter Verwendung eines gemeinsamen Parameters r und einer Einwegfunktion f() für jede der n autorisierten Personen aus dem persönlichen Schlüssel $k_i$ ein nachfolgend als shadow $s_i$ bezeichnetes Teilgeheimnis abgeleitet wird,

- danach in der zentralen Instanz aus den shadows aller autorisierten Personen ein (n,t)-Threshold-Verfahren mit $t \geq 2n-1$ konstruiert und aus den shadows $s_1 .... s_n$ ein Schlüssel k berechnet wird,

- danach die Daten zur Konstruktion von k über den ungesicherten Kanal übertragen werden,

- die es letztlich den empfangenden autorisierten Personen $P_1, ..., P_n$ ermöglichen, aus ihrem persönlichen Schlüssel $k_i$ den ihnen zugeordneten shadow $s_i$ abzuleiten und daraus mit Hilfe der mit übertragenden n-1 weiterer shadows sowie dem (n,t)-Threshold-Verfahrens den Krypto-Schlüssel k zu berechnen.

Dieses Verfahren ist für den Verbund leistungsfähiger Rechner vorgesehen und läßt deshalb unberücksichtigt, daß die Rechenleistung der vielfach verwendeten Zusatzgeräte für die Empfangsgeräte wesentlich geringer ist. Da die Menge der autorisierten Personen eine sich zeitlich ändernde Teilnahme einer Gesamtmenge von Teilnehmern ist, die sich für jede Sendung ändern kann, muß die Berechnung andererseits schnell und trotzdem gegen mögliche Angriffe hinreichend sicher sein.

Der Erfindung liegt die Aufgabe zugrunde, ein Verfahren anzugeben, das eine geringere Rechenleistung erfordert und dennoch hinreichend sicher ist.

Diese Aufgabe wird mit den im Kennzeichen des Patentanspruchs 1 dargelegten Verfahrensschritten gelöst.

Mit den verringerten Anforderungen an die Rechnerleistung erweitert sich das Anwendungsgebiet dieses sehr sicheren Verfahrens auch auf die Bereiche des täglichen Lebens, für die zunehmend auch eine kryptologische Sicherheit verlangt wird, wobei aber aus wirtschaftlichen Gründen die Rechnerleistung minimal sein muß, beispielsweise Dekoder für Pay-TV, T-Online für geschlossene Benutzergruppen, usw.

Hinsichtlich zusätzlicher kryptologischer Sicherheit sind vorteilhafte Weiterbildungen in den Kennzeichen der Unteransprüche 2 und 3 angeführt.

Das Grundprinzip, vom dem die Erfindung, die nachfolgend an Ausführungsbeispielen näher beschrieben wird, ausgeht, ist darin zu sehen, mit Methoden der symmetrischen Kryptographie die Funktionalität des in der DIN EN 50 094 beschriebenen Verfahrens nachzubilden, ohne Verschlüsselungsverfahren zu verwenden. Hierbei wird auf eine Kombination einer schlüsselgesteuerten Einwegfunktion mit einem Threshold-Verfahren (A. Shamir: How to Share a Secret. Comm. ACM, Vol. 24, Nr. 11, 1979, 118-119) zurückgegriffen. Dadurch kann bei Einhaltung rechtlicher Bestimmungen die Sicherheit des Schlüsselverteilmechanismus verbessert werden.

Eine Einwegfunktion (vgl. Beutelspacher, s. o.) ist eine Funktion $g(\cdot)$, die sich leicht auswerten läßt (d. h. für jeden Wert a ist $g(a)$ leicht berechenbar), für die es aber praktisch unmöglich ist, zu einem gegebenen Bildwert b ein Urbild a zu finden, so daß $g(a)=b$ gilt. Eine schlüsselgesteuerte Einwegfunktion ist eine Einwegfunktion $f()$ mit zwei Argumenten k und a, wobei der Wert k als Schlüssel angesehen werden kann.

Mit einem (n,t)-Threshold-Verfahren kann man ein Geheimnis k so in t Teile, die *shadows* genannt werden, zerlegen, daß dieses Geheimnis aus je n der t shadows rekonstruiert werden kann.

Als Beispiel für ein solches (n,t)-Threshold-Verfahren soll im folgenden ein Polynom vom Grad n-1 dienen, aus dem t=2n-l Stützstellen als Shadows ausgewählt werden.

Durch Angabe von n Stützstellen, d. h. von n Paaren $(x_i, y_i)$ (i=l,..., n) von Elementen eines Körpers mit unterschiedlichen x-Komponenten, wird ein eindeutiges Polynom vom Grad n-l definiert. Dieses Polynom schneidet die y-Achse in einem eindeutig definierten Punkt.

Zum Etablieren eines gemeinsamen Schlüssels für autorisierten Personen $P_l, ..., P_n$ wird zunächst jeder Person $P_i$ aus P unter Verwendung des persönlichen Schlüssels $k_i$ eine Stützstelle $(a_i, b_i)$ zugeordnet. Dies kann auf verschiedene Art und Weise geschehen:

    1. $(a_i, b_i) := (i, k_i)$,
    2. $(a_i, b_i) := (l, g(k_i))$ für eine Einwegfunktion $g(\cdot)$,
    3. $(a_i, b_i) := (i, f(r, k_i))$ für eine schlüsselgesteuerte Einwegfunktion $f()$ und eine Zufallszahl r,
    4. $(a_i, b_i) := (f(r, l_i), f(r, l_i'))$ für eine schlüsselgesteuerte Einwegfunktion $f()$, eine Zufallszahl r und $k_i = (l_i, l_i')$,

usw.

Durch die Stützstellen $(a_1, b_1), ..., (a_n, b_n)$ wird ein Polynom $p(x)$ vom Grad n-1 festgelegt. Der eindeutige Schnittpunkt

$$k := p(0)$$

dieses Polynoms mit der y-Achse ist der gemeinsame Schlüssel für $P_1, ..., P_n$. Damit die autorisierten Personen $P_l, ..., P_n$ diesen Wert k berechnen können, wählt die Zentrale n-l weitere Stützstellen $(c_l, d_l), ..., (c_{n-l}, d_{n-l})$, die von $(a_1, b_1), ..., (a_n, b_n)$ verschieden sein müssen. Diese können zusammen mit der zur Berechnung der Stützstellen nötigen Zusatzinformation (z. B. die Zufallszahl r aus 3.) an alle Personen aus P gesendet werden.

Nur die ausgewählten Personen $P_i$ (l≤i≤n) können jetzt den Schlüssel k berechnen. Dazu fügt die ausgewählte Person $P_i$ der Menge $(c_l, d_l), ..., (c_{n-l}, d_{n-l})$ die Stützstelle $(a_i, b_i)$ hinzu, die nur er und die Zentrale berechnen können, da nur er und die Zentrale den persönlichen Schlüssel $k_i$ kennen. Die so erhaltenen n Stützstellen legen das Polynom $p(x)$ und damit auch die Zahl $k = p(0)$ eindeutig fest.

Die nicht autorisierten Personen $P_i$ (n+l ≤ i ≤ m) können den Schlüssel k nicht berechnen, da die von ihnen berechenbaren Stützstellen $(a_i, b_i)$ nicht auf dem Graphen von $p(x)$ liegen.

Entsprechend der im Anspruch 1 angegebenen Erfindung wurde zur Ableitung der Stützstellen eine schlüsselgesteuerte Einwegfunktion, also eine Variante der Verfahren (3.) oder (4.) verwenden, um mögliche Angriffe auszuschließen, die bei Verwendung der schwächeren Varianten (1.) und (2.) möglich wären. In diesem Fall kann eindeutig gezeigt werden, daß ein nicht autorisierter Angreifer einen nach diesem Verfahren etablierten Schlüssel k nur dann brechen könnte, wenn er die Einwegfunktion umkehren könnte.

**Patentansprüche**

1. Verfahren zum Etablieren eines gemeinsamen Schlüssels k für autorisierte Personen mittels Threshold-Verfahrens durch eine Zentrale Z über ungesicherte Kanäle, insbesondere ein Rundfunkmedium, mit den Schritten, daß

    • jede Person $P_i$ des vorgegebenen Personenkreises P einen persönlichen Schlüssel $k_i$ besitzt, der nur dieser Person $P_i$ und einer Zentrale Z bekannt ist,
    • in der Zentrale Z unter Verwendung eines gemeinsamen Parameters r und einer Einwegfunktion $f()$ für jede der n autorisierten Personen aus dem persönlichen Schlüssel $k_i$ ein nachfolgend als shadow $s_i$ bezeichnetes Teilgeheimnis abgeleitet wird,
    • danach in der Zentrale Z aus den shadows aller autorisierten Personen ein (n,t)-Threshold-Verfahren mit t≥2n-1 konstruiert und aus den shadows $s_1 ... s_n$ ein Schlüssel k berechnet wird,

- danach die Daten zur Konstruktion von k über den ungesicherten Kanal übertragen werden,
- die es letztlich den empfangenden autorisierten Personen $P_1, ..., P_n$ ermöglichen, aus ihrem persönlichen Schlüssel $k_i$ den ihnen zugeordneten shadow $s_i$ abzuleiten und daraus mit Hilfe der mit übertragenen n-1 weiteren shadows sowie dem (n,t)-Threshold-Verfahren den Krypto-Schlüssel k zu berechnen, **dadurch gekennzeichnet,** daß in der Zentrale Z zur Verteilung von Krypto-Schlüsseln an eine sich zeitlich ändernde Teilmenge einer Gesamtmenge eines vorgegebenen Personenkreises von P Teilnehmern shadows $s_i$ aus dem persönlichen Schlüssel $k_i$ jeder autorisierten Person $P_i$ in den Arten:

  - $s_i = (i, f(r, k_i))$ für eine Einwegfunktion f() und eine Zufallszahl r, bzw.
  - $s_i = (f(r, l_i), f(R, l_i'))$ für eine Einwegfunktion f(), eine Zufallszahl r und $ki = (l_i, l_i')$ abgeleitet werden.

2. Verfahren nach Anspruch 1, dadurch gekennzeichnet, daß das (n,t)-Threshold-Verfahren durch ein Polynom vom Grad n-1 realisiert wird, das durch n Stützstellen, zu deren Ableitung die shadows verwendet werden, eindeutig definiert ist, und bei dem weitere shadows dadurch gewonnen werden, daß die Zentrale Punkte auf dem Graphen des Polynoms auswählt, die von den aus den shadows der autorisierten Teilnehmer gewonnenen Stützstellen verschieden sind.

3. Verfahren nach Anspruch 1, dadurch gekennzeichnet, daß es zum sukzessiven Etablieren einer Hierarchie von Schlüsseln verwendet wird.

**Claims**

1. Method for establishing a common key k for authorized persons by means of a threshold procedure, through a central office Z, over unsecured channels, particularly a broadcasting medium, with the following steps:

   - Each person $P_i$ of the given group of persons P possesses a personal key $k_i$ which is only known to that person $P_i$ and to a central office Z;
   - at the central office Z, a partial secret, in the following designated as shadow $s_i$, is derived for each of the n authorized persons from their personal key $k_i$, using a common parameter r and a one-way function f();
   - subsequently, an (n, t) threshold procedure with $t \geq 2n-1$ is constructed from the shadows of all authorized persons, and a key k is calculated

from the shadows $s_1 ... s_n$;
- then, the data for the construction of k are transmitted over the unsecured channel;
- finally, these data allow the receiving authorized persons $P_i, ..., P_n$ to derive from their personal key $k_i$ the shadow $s_i$ assigned to them and - using the other n-1 shadows that were also transmitted as well as the (n, t) threshold procedure - to compute from this the crypto-key k, **characterized in that** at the central office Z, in order to distribute crypto-keys to a subset, varying over time, of a universal set of a given group of persons consisting of P participants, shadows si of the following types are derived from the personal $k_i$ of each authorized person $P_i$:

  - $s_i = (i, f(r, k_i))$ for a one-way function f ( ) and a random number r; or
  - $s_i = (f(r, 1_i), f(r, l_i'))$ for a one-way function f ( ), a random number r and $k_i = (l_i, l_i')$.

2. A method in accordance with claim 1, characterized in that the (n, t) threshold procedure is carried out using a polynomial of degree n-1, which is uniquely defined by n interpolation nodes derived using the shadows and from which additional shadows are obtained at the central office by selecting points on the graph of the polynomial that are different from the interpolation nodes obtained from the shadows of the authorized participants.

3. A method in accordance with claim 1, characterized in that it is used for successively establishing a hierarchy of keys.

**Revendications**

1. Technique relative à l'établissement d'une clé commune pour des personnes autorisées au moyen de procédés seuil effectués par un organisme central Z via des voies non sécurisées, notamment un moyen de radiodiffusion, qui comporte les pas suivants:

   - chaque personne $P_i$ d'un cercle de personnes P possède une clé personnelle $k_i$ qui n'est connue que de cette personne $P_i$ et d'un organisme central Z;
   - à l'organisme central Z, un secret partiel $s_i$ est déduit de la clé personnelle de chacune des n personnes autorisées par l'utilisation d'un paramètre commun r et d'une fonction à une voie f();
   - à l'organisme central Z, un procédé seuil (n,t) est ensuite construit avec $t \geq 2n-1$ sur la base des secrets partiels de toutes les personnes autorisées et une clé k est calculée par l'intermédiaire des secrets partiels $s_1 \ldots s_n$;

- les données servant à construire la clé k sont transmises sur la voie non sécurisée,

- ces données permettant enfin aux personnes autorisées $P_1, \ldots, P_n$ qui les reçoivent de déduire de leur clé personnelle $k_i$ le secret partiel $s_i$ qui leur a été assigné et de calculer ainsi la clé cryptographique k grâce aux n-1 autres secrets partiels transmis en même temps et au procédé seuil (n,t), **caractérisé en ce que,** à l'organisme central Z et en vue de la distribution de clés cryptographiques à un sous-ensemble, changeant avec le temps, d'un ensemble de personnes de P participants, les secrets partiels si suivants sont déduits de la clé personnelle $k_i$ de chaque personne autorisée $P_i$:

  - $s_i = (i, f(r, k_i))$ pour une fonction à une voie f( ) et un nombre variable r ou
  - $s_i = (f(r, l_i), f(r, l_i))$ pour une fonction à une voie f ( ) et un nombre variable r et ki = $(l_i, l_i')$

2. Technique selon la revendication 1, caractérisée en ce que le procédé seuil (n, t) est réalisé sous forme d'un polynôme du degré n-1 qui est défini de façon univoque par n points d'appui pour la déduction desquels sont utilisés les secrets partiels et que d'autres secrets partiels sont gagnés par le fait que l'organisme central choisit des points sur le graphe du polynôme autres que les points d'appui déduits des secrets partiels des participants autorisés.

3. Technique selon la revendication 1, **caractérisée en ce que** ce procédé est utilisé pour l'établissement successif d'une hiérarchie de clés.